# FASCICULE DE BREVET EUROPEEN

(11) **EP 1 531 298 B1**
(45) Date de publication et mention de la délivrance du brevet: **13.01.2010**
(21) Numéro de dépôt: 04356179.4
(22) Date de dépôt: 10.11.2004
(51) Int. Cl.: F16L 41/00, F16L 41/02, F16L 41/16, F16K 37/00, F16L 37/084

(54) **Piquage, circuit pneumatique équipé d'un tel piquage et ensemble comprenant un tel circuit**
Abzweigungsvorrichtung, pneumatisches Leitungssystem mit einer solchen Abzweigungsvorrichtung, Anordnung mit einem solchen Leitungssystem
Tapping device, pneumatic circuit comprising such a tapping device, assembly comprising such a circuit

(30) Priorité: 13.11.2003 FR 0313290
(43) Date de publication de la demande: 18.05.2005
(73) Titulaire: STÄUBLI FAVERGES, 74210 Faverges (FR)
(72) Inventeur: Chappaz, René, 74210 Faverges (FR)
(74) Mandataire: Myon, Gérard Jean-Pierre

(56) Documents cités:
- EP-A- 1 333 218
- US-A- 3 987 817
- US-A- 4 510 970

## Description

L'invention a trait à un piquage pour un circuit pneumatique, ainsi qu'à un circuit pneumatique équipé d'un tel piquage et qu'à un ensemble comprenant, entre autres, un tel circuit.

Dans le domaine des véhicules ferroviaires, il est connu d'utiliser un circuit de gaz sous pression pour la commande automatique des portes des voitures. Un tel circuit est généralement équipé d'un manomètre permettant de connaître la pression du gaz dans le circuit. Il est par ailleurs prévu de le raccorder périodiquement, au moyen d'un dispositif de remplissage adapté, à une source de fluide sous pression tel qu'un compresseur. Un tel système est complexe et coûteux, alors que sa manipulation n'est pas simple et peut s'avérer fastidieuse. En outre, les sources potentielles de fuite de gaz sont relativement nombreuses, ce qui impose des contrôles fréquents, tout particulièrement dans la mesure où un tel circuit concerne la sécurité des personnes transportées dans un tel véhicule.

Il est par ailleurs connu de US-A-3,987,817 d'équiper un piquage permettant de tester des vannes pilotes d'un piston qui se prolonge par un clapet d'obturation commandée de la circulation de fluide dans une ligne principale du piquage. Ce piston est déplacé en translation par le vissage d'une prise de pression, ce qui est une opération fastidieuse. En outre, une seule configuration est envisagée dans laquelle la prise de pression est alimentée. La circulation de fluide dans la ligne principale du piquage est alors interrompue. Ce piquage ne peut donc pas être utilisé pour mesurer une pression et remplir un circuit.

C'est à ces inconvénients qu'entend plus particulièrement remédier l'invention en proposant un nouveau piquage pour circuit pneumatique qui permet de simplifier les opérations de prise de pression et de remplissage du circuit, tout en rendant plus économique et rapide son utilisation et en diminuant les sources de fuites potentielles.

Dans cet esprit, l'invention concerne un piquage pour circuit pneumatique selon la revendication 1.

Grâce à l'invention, un seul piquage peut être utilisé pour assurer à la fois le remplissage du circuit et la prise de pression, ce piquage constituant alors l'élément femelle d'un raccord dont l'élément mâle équipe un manomètre, un dispositif de remplissage du circuit ou ces deux matériels à la fois. Le clapet auxiliaire permet d'isoler une partie du circuit pneumatique lors des opérations de remplissage.

Selon des aspects avantageux mais non obligatoires de l'invention, un piquage peut incorporer une ou plusieurs des caractéristiques suivantes prises dans toute combinaison techniquement admissible :
- Le clapet auxiliaire n'interrompt pas le circuit lorsque l'élément mâle est retenu dans l'autre configuration emmanchée. Ce clapet auxiliaire ne gêne donc pas l'écoulement de gaz lors de la prise de pression.
- Le clapet et le clapet auxiliaire sont solidaires en translation parallèlement au sens de déplacement du clapet sous l'effet de l'emmanchement d'un élément mâle. Dans ce cas, ces clapets peuvent être formés sur deux parties décalées axialement d'un même tiroir apte à se déplacer parallèlement à son axe longitudinal.
- Le verrou peut être pourvu de deux reliefs décalés axialement le long de la direction d'emmanchement des éléments mâle et femelle, ces reliefs étant aptes à coopérer sélectivement avec un relief correspondant prévu sur un ou des éléments mâles pour définir les deux configurations précitées. En variante, le verrou est pourvu d'un unique relief apte à coopérer avec deux reliefs correspondants prévus sur un ou des éléments mâles en étant décalés axialement le long de la direction d'emmanchement pour définir les deux configurations précitées.
- Les clapets sont chargés élastiquement, par un moyen commun, vers une position où le clapet principal obture l'élément femelle et où le clapet secondaire n'interrompt pas le circuit pneumatique.
- Le piquage est solidaire d'une embase de raccordement au circuit précité, cette embase étant elle-même pourvue d'au moins un conduit de circulation de gaz et apte à être fixée de façon amovible sur un corps qui définit ce conduit.
- Le piquage constitue une prise de pression apte à être reliée à un dispositif de mesure de pression au moyen d'un élément mâle emmanché dans la première configuration, cette prise de pression étant apte à être reliée à une source de gaz de remplissage du circuit pneumatique et/ou d'un réservoir associé, au moyen du même élément mâle emmanché dans la seconde configuration.

L'invention concerne également un circuit pneumatique, notamment équipant un véhicule ferroviaire, qui est pourvu d'un piquage tel que précédemment décrit.

Un tel circuit est plus fiable et plus facile à utiliser que ceux de l'état de la technique.

L'invention concerne également un ensemble qui comprend un circuit pneumatique tel que mentionné ci-dessus ainsi que des moyens de mesure de la pression régnant dans une partie du circuit et des moyens de remplissage du circuit ou d'un réservoir associé, ces moyens de mesure comprenant un élément mâle apte à être emmanché dans les première et seconde configurations précitées dans le piquage.

L'invention sera mieux comprise et d'autres avantages de celle-ci apparaîtront plus clairement à la lumière de la description qui va suivre de deux modes de réalisation d'un circuit pneumatique conforme à l'invention équipé d'un piquage conforme à l'invention et des moyens de mesure de pression et de remplissage associés, donnée uniquement à titre d'exemple et faite en référence aux dessins annexés dans lesquels :
- la figure 1 est une demi coupe de principe d'un piquage conforme à l'invention équipant un circuit conforme à l'invention et d'un about mâle associé équipant un manomètre et une source de pression ;
- la figure 1A est une représentation fluidique du piquage dans la configuration de la figure 1 ;
- la figure 2 est une vue analogue à la figure 1, alors que l'about mâle est emmanché dans le piquage dans une première configuration permettant la prise de pression ;
- la figure 2A est une représentation fluidique analogue à la figure 1A pour l'about et le piquage dans la configuration de la figure 2 ;
- la figure 2B est une vue à plus grande échelle du détail B à la figure 2 ;
- la figure 3 est une vue analogue à la figure 1, alors que l'about mâle est inséré dans le piquage dans une seconde configuration de remplissage du circuit ;
- la figure 3A est une représentation fluidique du piquage et de l'about mâle dans la configuration de la figure 3, et
- la figure 4 est une vue analogue à la figure 3 pour un piquage et un about conformes à un second mode de réalisation.

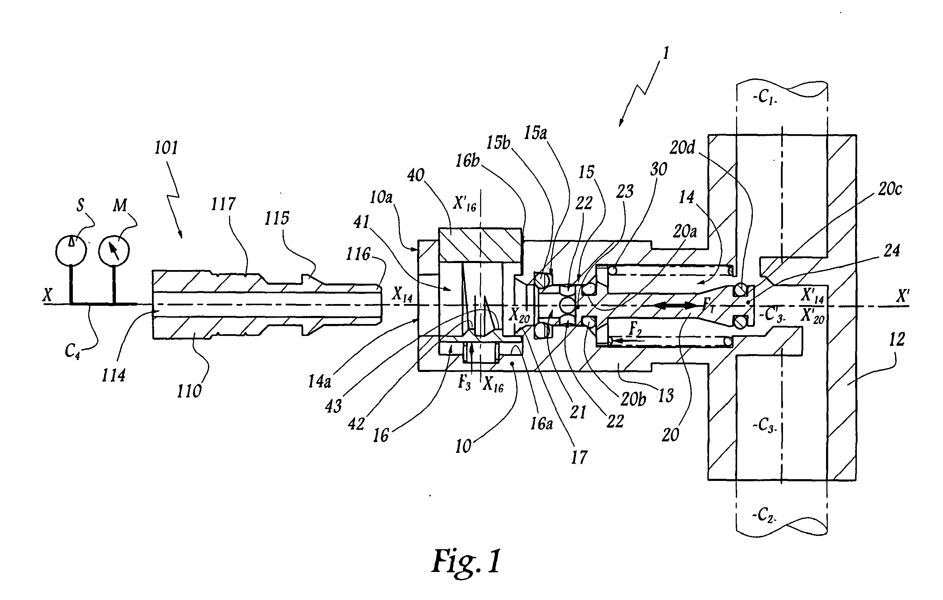

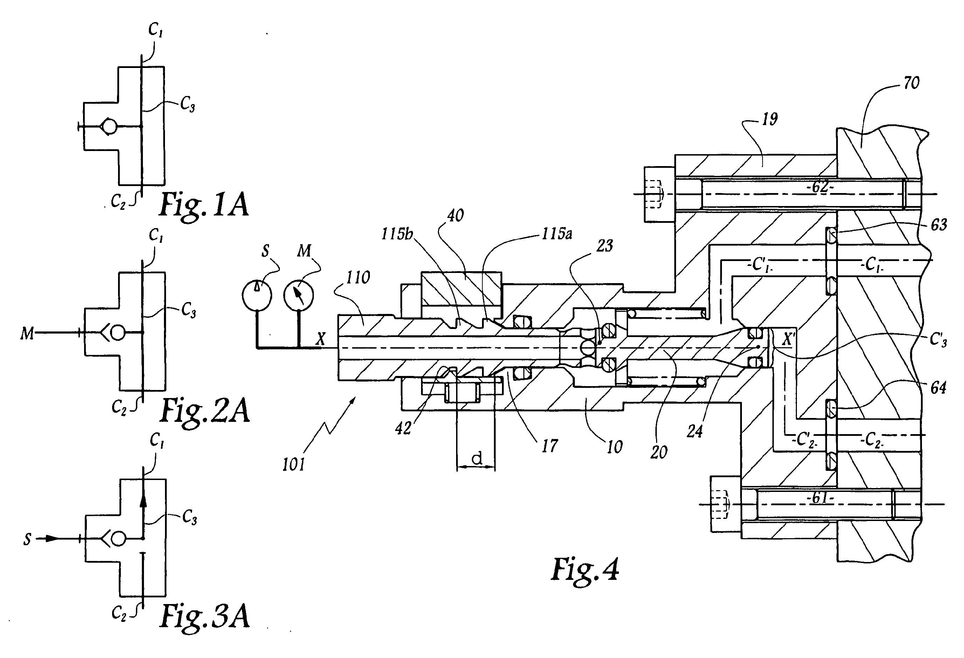

Le piquage 1 représenté aux figures 1 à 3 est destiné à être intégré à un circuit pneumatique entre une canalisation amont C₁ et une canalisation aval C₂. La canalisation C₁ est reliée à un réservoir de gaz sous pression et la canalisation C₂ est reliée aux systèmes d'actionnement des portes d'une voiture ferroviaire, le circuit étant intégré à cette voiture.

Le piquage 1 comprend un corps globalement en forme de T dont la partie 12, qui s'étend entre les canalisations C₁ et C₂, définit un conduit C₃ qui fait partie du même circuit pneumatique. Le corps 11 comprend également une partie 13 qui s'étend globalement selon une direction perpendiculaire à celle du conduit C₃ et dans laquelle est défini un logement central 14 de réception d'un tiroir 20 mobile en translation dans la direction d'un axe longitudinal X₁₄-X'₁₄ du logement 14 qui est également un axe central de la partie 13. A la figure 1, la double flèche F₁ représente la possibilité de déplacement du tiroir 20 dans le logement 14.

Le tiroir 20 est soumis à l'action d'un ressort 30 qui exerce un effort F₂ tendant à le plaquer contre une zone 15 de la partie 13 formant siège d'appui étanche. La zone 15 est pourvue d'une gorge 15a de réception d'un joint torique 15b, alors que le tiroir 20 est équipé d'une gorge périphérique externe 20a de réception d'un joint torique 20b. Le joint 20b assure l'étanchéité de la fermeture dans la configuration de la figure 1.

Le tiroir 20 est également pourvu d'un conduit central 21 débouchant par des trous radiaux 22, ce qui permet l'écoulement de gaz à travers la partie 13 du piquage 1, ainsi qu'il ressort des explications qui suivent.

Ainsi, la partie 23 du tiroir 20 dans laquelle sont ménagées les éléments 20a, 21 et 22 constitue un clapet commandé d'obturation du piquage 1.

La partie 13 du corps 10 définit également un logement 16 qui s'étend dans la direction d'un axe X₁₆-X'₁₆ globalement perpendiculaire à l'axe X₁₄-X'₁₄. A l'intérieur du logement 16 est monté, à coulissement, un verrou 40 sur lequel un ressort 50 exerce un effort élastique F₃ dirigé à l'opposé du fond 16a du logement 16 qui est borgne. En d'autres termes, l'effort F₃ est dirigé en direction du débouché 16b du logement 16. Le mouvement du verrou 40 sous l'effet de l'effort F₃ est limité par une butée 17 formée par le corps 10. Le fonctionnement du verrou 40 peut être rapproché de celui du verrou connu de FR-A-2 514 855.

Les logements 14 et 16 se croisent et le verrou 40 est pourvu d'une ouverture transversale 41 centrée sur un axe parallèle à l'axe X₁₄-X'₁₄.

L'ouverture 41 est bordée par deux dents 42 et 43 qui s'étendent, à partir de la partie de circonférence de l'ouverture 41 la plus proche du fond 16a, en direction de l'axe central de celle-ci. La dent 42 est la plus proche du débouché 14a du logement 14 à l'opposé de la partie 12. Ces dents sont donc décalées axialement le long de l'axe X₁₄-X'₁₄.

Le tiroir 20 est équipé d'une seconde gorge 20c dans laquelle est monté un second joint torique 20d.

En pratique, le tiroir 20 a globalement une forme de tige monobloc entre les gorges 20a et 20c, de sorte qu'un mouvement du clapet 23 induit un mouvement correspondant de son extrémité 24 dans laquelle est ménagée la gorge 20c. Le tiroir 20 a son axe longitudinal X₂₀-X'₂₀ confondu avec l'axe X₁₄-X'₁₄.

Dans la configuration de la figure 1, du fait de l'effort F₂, le clapet 23 est en appui contre la zone 15 et le piquage 1 isole les parties C₁, C₂ et C₃ du circuit pneumatique de l'extérieur.

Le piquage 1 est destiné à coopérer avec un about mâle 101 dont le corps 110 définit un conduit 114 de circulation de gaz et est relié à un manomètre M et à une source S de gaz sous pression par une canalisation C₄. La source S est, dans l'exemple, un compresseur.

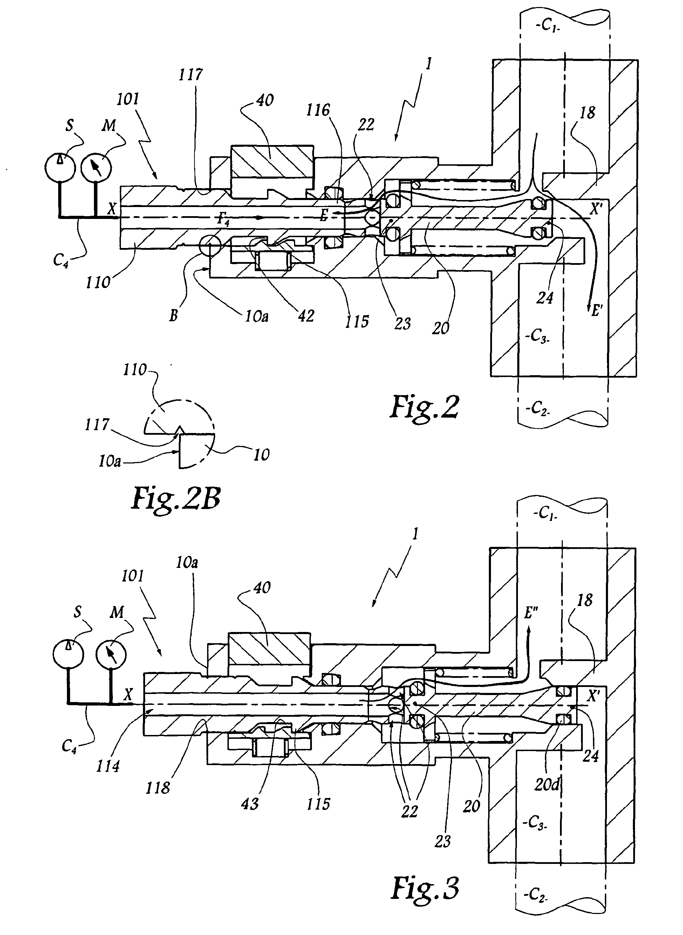

Lorsqu'il convient de mesurer la pression régnant dans le circuit, l'about ou élément mâle 101 est introduit, à travers le débouché 14a, selon une direction d'emmanchement X-X' parallèle à l'axe X₁₄ -X'₁₄ et comme représenté par les flèches F₄, dans le logement 14 jusqu'à ce qu'une collerette périphérique externe 115 du corps 110 vienne s'accrocher en arrière de la dent 42 par rapport au débouché 14a, comme représenté à la figure 2. Dans cette configuration, l'extrémité avant 116 du corps 110 a repoussé le clapet 23 à l'encontre de l'effort F₂, ce qui permet une circulation de gaz du conduit C₃ vers la canalisation C₄ à travers le logement 14, qui forme alors un conduit de circulation de gaz, les trous 22 et 21 et le conduit 114. Cet écoulement est représenté par la flèche E à la figure 2.

Cet écoulement permet au manomètre M de mesurer la pression régnant dans le conduit C₃, c'est-à-dire dans le circuit pneumatique.

Du fait du déplacement du clapet 23 de sa position de la figure 1 à celle de la figure 2, l'extrémité 24 s'est rapprochée d'une cloison circulaire 18 du corps 10. On note cependant à la figure 2 que l'extrémité 24 ne vient pas au contact de cette cloison, de sorte qu'un écoulement de gaz demeure possible entre les conduit C₁ et C₂, comme représenté par la flèche E'.

Comme il ressort plus particulièrement de la figure 2B, le corps 110 de l'about 101 est pourvu d'une marque formée par une rainure circonférentielle 117, cette marque étant destinée à être approximativement alignée avec la face avant 10a du corps 10 dans laquelle est ménagé le débouché 14a lorsque l'about 101 est dans la configuration de la figure 2. En d'autres termes, lorsque l'utilisateur voit que la marque 117 est approximativement au niveau de la face avant 10a, il peut en déduire que l'about 101 est efficacement retenu en position par la dent 42, la configuration fluidique étant telle que représentée à la figure 2A.

Lorsqu'il convient de remplir le circuit pneumatique en gaz, l'élément mâle ou about 101 est introduit dans le piquage 1 jusqu'à ce que sa collerette 115 se verrouille en arrière de la dent 43. Pour atteindre cette position, l'utilisateur pousse le corps 110 de l'about 101 dans le sens de la flèche F₄ jusqu'à ce qu'une seconde marque 118, décalée axialement par rapport à la marque 117 utilisée dans la configuration de la figure 2, vienne en regard de la face avant 10a du bord 10, ce qui induit que le clapet 20 est alors repoussé plus profondément dans le corps 10, au point que son extrémité 24 vient obturer la partie C'₃ du conduit C₃ définie par la cloison circulaire 18.

Ainsi, l'extrémité 24 du clapet 20 équipé du joint 20d constitue un clapet auxiliaire qui permet d'interrompre la circulation de gaz entre les canalisations C₁ et C₂ lors du remplissage du circuit ou lors du remplissage d'un réservoir associé au circuit et pouvant être atteint à travers la canalisation C₁.

A la figure 3, la flèche E" représente l'écoulement du gaz provenant de la source S et dirigé vers la canalisation C₁.

Cet écoulement a lieu à travers le conduit central 114 de l'élément mâle 101 et à travers le conduit 21, les trous 22, le conduit 14 et le conduit C₃ du piquage 1.

Compte tenu de l'obturation par le clapet 24 de la partie C'₃ du conduit C₃ délimitée par la cloison 18, toute surpression momentanée résultant de l'écoulement E' ne risque pas d'endommager des dispositifs branchés sur la canalisation C₂.

Dans le second mode de réalisation de l'invention représenté à la figure 4, les éléments analogues à ceux du premier mode de réalisation portent des références identiques.

Ce mode de réalisation diffère du précédent en ce que le corps 10 du piquage 1 est monobloc avec une embase 19 destinée à être rapportée au moyen de deux vis 61 et 62 sur un corps 70 dans lequel sont ménagées des canalisations C₁ et C₂. Pour ce faire, des conduits annexes C'₁ et C'₂ sont ménagés dans l'embase 19 avec une géométrie permettant leur raccordement simultané aux canalisations C₁ et C₂. Des joints toriques 63 et 64 sont prévus à la jonction des conduits et canalisations C'₁ et C₁, d'une part, et C'₂ et C₂, d'autre part. La réunion des conduits C'₁ et C'₂ correspond, en pratique, au conduit C₃ du premier mode de réalisation.

Ce mode de réalisation diffère également du précédent en ce qu'une seule dent 42 est prévue sur le verrou 40, alors que deux collerettes 115a et 115b sont ménagées sur le corps 110 de l'about mâle 101. La distance d entre la dent 42 et la butée 17 formée par le corps 10 du piquage 1 est telle qu'un corps ayant la géométrie du corps 110 peut être retenu dans l'ouverture 41 dans deux configurations, à savoir celle représentée à la figure 4 où la collerette 115b est en appui contre la dent 42, auquel cas le clapet 20 est repoussé au point que son extrémité arrière 24 obture le conduit C'₃ reliant les conduits C'₁ et C'₂, et une configuration dans laquelle la collerette 115a est en appui contre la dent 42, le clapet 20 étant alors dans une configuration similaire à celle représentée à la figure 2.

Dans ce mode de réalisation, la distance d permet un emmanchement des éléments mâles 101 dans l'élément femelle 102 dans les deux configurations décalées axialement, alors que cette faculté est obtenue grâce aux deux dents 42 et 43 dans le premier mode de réalisation.

Dans les deux modes de réalisations représentés, un seul about mâle est utilisé pour la prise de pression et pour le remplissage, cet about pouvant être emmanché plus ou moins profondément dans le piquage.

Selon un mode de réalisation non représentée de l'invention, deux abouts mâles de même géométrie peuvent utilisés alternativement, l'un d'entre eux étant relié à un manomètre et destiné à être emmanché dans la première configuration, alors que l'autre about est relié à une source de gaz sous pression, éventuellement associée à un manomètre, et destiné à être emmanché dans la seconde configuration.

Selon un autre mode de réalisation non représenté de l'invention, le verrou 40 du piquage 1 peut avoir une seule dent, comme représenté à la figure 4, alors que deux types d'abouts mâles de géométries distinctes sont utilisés, à savoir un premier about mâle dont l'unique collerette est positionnée, par rapport à la face avant de l'embout, sensiblement comme la collerette 115a de l'about 101 représenté à la figure 4 et un autre about dont l'unique collerette est positionnée sensiblement comme la collerette 115b de cet about. Ainsi, lorsqu'on utilise le premier type d'about, on repousse le clapet 20 à mi-course, c'est-à-dire dans la position de la figure 2 pour le premier mode de réalisation, alors que, lorsqu'on utilise le second type d'about, on repousse complètement le clapet, comme représenté aux figures 3 et 4. Dans ce cas, le premier type d'about peut être raccordé à un manomètre, alors que le second type d'about peut être raccordé à une source de gaz sous pression.

Les caractéristiques techniques des modes de réalisation décrits peuvent être combinées entre elles dans le cadre de la présente invention.

L'invention a été représentée dans son utilisation dans le domaine ferroviaire mais trouve application dans tout autre domaine d'application nécessitant le remplissage de réservoirs ou de circuits sous pression.

## Revendications

1. Piquage pour circuit pneumatique, ledit piquage définissant un élément femelle de raccord rapide équipé d'un clapet d'obturation (23), ledit élément femelle (1) étant pourvu d'un verrou (40) monté à coulissement dans un corps (10) dudit piquage et percé d'une ouverture (41) pour l'emmanchement d'une partie (116) d'un élément mâle (101) de raccord, la paroi de ladite ouverture (41) étant pourvue de moyens (42, 43) complémentaires de moyens (115 ; 115a, 115b) prévus sur l'élément mâle (110) et permettant de retenir l'élément mâle dans deux configurations (figures 2 et 3 ou 4) emmanchées dans ledit élément femelle dans lesquelles ledit clapet d'obturation (23) est dans des positions permettant l'écoulement (E, E'') de fluide, lesdites configurations étant décalées l'une de l'autre parallèlement à la direction (X-X') d'emmanchement desdits éléments (1, 101) et ledit clapet d'obturation (23) étant apte à actionner un clapet auxiliaire du piquage (24) pour interrompre ledit circuit (C₁, C₂, C₃) lorsque ledit élément mâle est retenu par ledit verrou dans l'une desdites configurations emmanchées (fig. 3, 4).

2. Piquage selon la revendication 1, **caractérisé en ce que** ledit clapet auxiliaire (24) n'interrompt pas ledit circuit lorsque ledit élément mâle (101) est retenu dans l'autre configuration emmanchée (fig. 2).

3. Piquage selon l'une des revendications précédentes, **caractérisé en ce que** ledit clapet d'obturation (23) et ledit clapet auxiliaire (24) sont solidaires en translation parallèlement à la direction de déplacement (F₁) dudit clapet sous l'effet de l'emmanchement (F₄) d'un élément mâle (101).

4. Piquage selon la revendication 3, **caractérisé en ce que** ledit clapet d'obturation (23) et ledit clapet auxiliaire (24) sont formés sur deux parties décalées axialement d'un même tiroir (20) apte à se déplacer parallèlement à son axe longitudinal (X₂₀-X'₂₀).

5. Piquage selon l'une des revendications précédentes, **caractérisé en ce qu'**il comprend une partie (18) définissant un tronçon (C'₃) dudit circuit (C₁, C₂, C₃) et destinée à être sélectivement obturée par ledit clapet auxiliaire (24).

6. Piquage selon l'une des revendications précédentes, **caractérisé en ce que** ledit verrou (40) est pourvu de deux reliefs (42, 43) décalés axialement le long de la direction d'emmanchement (X-X') desdits éléments (1, 101) et aptes à coopérer sélectivement avec un relief correspondant (115, 115') prévu sur un ou des éléments mâles pour définir lesdites deux configurations.

7. Piquage selon l'une des revendications 1 à 5, **caractérisé en ce que** ledit verrou est pourvu d'un unique relief (42) apte à coopérer avec deux reliefs correspondants (115a, 115b) prévus sur un ou des éléments mâles en étant décalés axialement le long de la direction d'emmanchement (X-X') pour définir lesdites deux configurations.

8. Piquage selon l'une des revendications précédentes, **caractérisé en ce que** ledit clapet d'obturation (23) et ledit clapet auxiliaire (24) sont chargés élastiquement, par un moyen commun (30), vers une position (fig. 1) où ledit clapet d'obturation (23) obture ledit élément femelle (1) et où ledit clapet auxiliaire (24) n'interrompt pas ledit circuit (C₁, C₂, C₃).

9. Piquage selon l'une des revendications précédentes, **caractérisé en ce qu'**il est solidaire d'une embase (19) de raccordement audit circuit (C₁, C₂), ladite embase étant elle-même pourvue d'au moins un conduit. (C'₁, C'₂) de circulation de gaz et apte à être fixée de façon amovible (par 61, 62) sur un corps (70) définissant ledit conduit.

10. Piquage selon l'une des revendications précédentes, **caractérisé en ce qu'**il constitue une prise de pression (1) apte à être reliée à un dispositif (M) de mesure de pression au moyen d'un élément mâle (101) emmanché dans ladite première configuration, ladite prise de pression étant apte à être reliée à une source (S) de gaz de remplissage du circuit pneumatique et/ou d'un réservoir associé au moyen du même élément mâle (101) emmanché dans ladite seconde configuration.

11. Circuit pneumatique (C₁, C₂, C₃ ; C₁, C₂, C'₁, C'₂), notamment équipant un véhicule ferroviaire, pourvu d'un piquage (1) selon l'une des revendications précédentes.

12. Ensemble comprenant un circuit pneumatique (C₁, C₂, C₃ ; C₁, C₂, C'₁, C'₂) selon la revendication 11, des moyens (M) de mesure de la pression régnant dans une partie dudit circuit et des moyens (S) de remplissage dudit circuit ou d'un réservoir associé, lesdits moyens de mesure comprenant, en outre, un élément mâle (101) apte à être emmanché dans lesdites première et seconde configurations dans ledit piquage.

## Claims

1. Branch connection for pneumatic circuit, said branch connection defining a female quick connection element equipped with a closure valve (23), said female element (1) being provided with a locking member (40) mounted to slide in a body (10) of said branch connection and pierced with an opening (41) for the fit of a part (116) of a male connection element (101), the wall of said opening (41) being provided with means (42, 43) complementary of means (115; 115a, 115b) provided on the male element (110) and retaining the male element in two configurations (Figures 2 and 3 or 4) fitted in said female element in which said closure valve (23) is in positions allowing the flow (E, E") of fluid, configurations being offset from each other parallel to the direction (X-X') of fit of said elements (1, 101) and said closure valve (23) being adapted to actuate an auxiliary valve of said branch connection (24) in order to interrupt said circuit (C₁, C₂, C₃) when said male element is retained by said locking member in one of said fitted configurations (Figures 3, 4).

2. Branch connection according to Claim 1, **characterized in that** said auxiliary valve (24) does not interrupt said circuit when said male element (101) is retained in the other fitted configuration (Figure 2).

3. Branch connection according to one of the preceding Claims, **characterized in that** said closure valve (23) and said auxiliary valve (24) are fast in translation parallel to the direction of displacement (F₁) of said valve under the effect of the fit (F₄) of a male element (101).

4. Branch connection according to Claim 3, **characterized in that** said closure valve (23) and said auxiliary valve (24) are formed on two axially offset parts of the same slide (20) adapted to move parallel to its longitudinal axis (X₂₀-X'₂₀).

5. Branch connection according to one of the preceding Claims, **characterized in that** it comprises a part (18) defining a portion (C'₃) of said circuit (C₁, C₂, C₃) and intended to be selectively obturated by said auxiliary valve (24).

6. Branch connection according to one of the preceding Claims, **characterized in that** said locking member (40) is provided with two elements in relief (42, 43) offset axially in the direction of fit (X-X') of said elements (1, 101) and adapted to cooperate selectively with a corresponding element in relief (115, 115') provided on one or a plurality of male elements in order to define said two configurations.

7. Branch connection according to one of Claims 1 to 5, **characterized in that** said locking member is provided with a single element in relief (42) adapted to cooperate with two corresponding elements in relief (115a, 115b) provided on one or a plurality of male elements, being offset axially in the direction of fit (X-X') in order to define said two configurations.

8. Branch connection according to one of the preceding Claims, **characterized in that** said closure valve (23) and said auxiliary valve (24) are elastically loaded, by a common means (30), towards a position (Figure 1) where said closure valve (23) obturates said female element (1) and where said auxiliary valve (24) does not interrupt said circuit (C₁, C₂, C₃).

9. Branch connection according to one of the preceding Claims, **characterized in that** it is fast with a base (19) for connection to said circuit (C₁, C₂), said base itself being provided with at least one conduit (C'₁, C'₂) for circulation of gas and adapted to be removably fixed (by 61, 62) on a body (70) defining said conduit.

10. Branch connection according to one of the preceding Claims, **characterized in that** it constitutes a pressure tapping (1) adapted to be connected to a device (M) for measuring pressure by means of a male element (101) fitted in said first configuration, said pressure tapping being adapted to be connected to a source (S) of gas for filling the pneumatic circuit and/or a reservoir associated therewith by means of the same male element (101) fitted in said second configuration.

11. Pneumatic circuit (C₁, C₂, C₃; C₁,C₂, C'₁, C'₂), particularly equipping a railway vehicle, provided with a branch connection (1) according to one of the preceding Claims.

12. Assembly comprising a pneumatic circuit (C₁, C₂, C₃; C₁,C₂, C'₁, C'₂) according to Claim 11, means (M) for measuring the pressure prevailing in a part of said circuit and means (S) for filling said circuit or a reservoir associated therewith, said measuring means further comprising a male element (101) adapted to be fitted in said first and second configurations in said branch connection.

## Patentansprüche

1. Abzweiganschluss für einen pneumatischen Kreis, wobei der Anschluss ein Aufnahmeelement einer Schnellkupplung beschreibt, das mit einem Verschlussventil (23) ausgerüstet ist, wobei das Aufnahmeelement (1) mit einer Verriegelung (40) versehen ist, die gleitend in einem Körper (10) des Anschlusses montiert ist, der von einer Öffnung (41) zum Aufnehmen eines Teils (116) eines Steckelements (101) der Kupplung durchgriffen wird, wobei die Wand der Öffnung (41) mit Mitteln (42, 43) komplementär zu Mitteln (115; 115a, 115b)versehen ist, die an dem Steckelement (110) vorgesehen sind und ein Halten des Steckelements in zwei Stellungen (Figuren 2 und 3 oder 4), bei denen es in das Aufnahmeelement eingeführt ist, ermöglicht und in denen das Verschlussventil (23) sich in Positionen befindet, die ein Strömen (E, E") des Fluids gestatten, wobei die Stellungen zueinander parallel in die Einführrichtung (X-X') der Elemente (1, 101) versetzt sind und das Verschlussventil (23) geeignet ist, ein Hilfsventil (24) des Abzweiganschlusses zu betätigen, um den Kreis (C₁, C₂, C₃) zu unterbrechen, wenn das Steckelement von der Verriegelung in einer der ineinander gesteckten Stellungen (Fig. 3, 4) gehalten wird.

2. Abzweiganschluss nach Anspruch 1, **dadurch gekennzeichnet, dass** das Hilfsventil (24) nicht den Kreis unterbricht, wenn das Steckelement (101) in einer anderen ineinandergesteckten Stellung (Fig. 2) gehalten wird.

3. Abzweiganschluss nach einem der vorhergehenden Ansprüche, **dadurch gekennzeichnet, dass** das Verschlussventil (23) und das Hilfsventil (24) in Translation parallel zur Verschieberichtung (F₁) des Ventils unter der Wirkung des Einsteckens (F₄) eines Steckelements (101) verbunden sind.

4. Abzweiganschluss nach Anspruch 3, **dadurch gekennzeichnet, dass** das Verschlussventil (23) und das Hilfsventil (24) an zwei axial versetzten Bereichen eines selben Schiebers (20) gebildet sind, der ausgebildet ist, sich parallel zu seiner Längsachse (X₂₀-X'₂₀) zu verschieben.

5. Abzweiganschluss nach einem der vorhergehenden Ansprüche, **dadurch gekennzeichnet, dass** er einen Bereich (18) umfasst, der einen Abschnitt (C'₃) des Kreises (C₁, C₂, C₃) bestimmt und vorgesehen ist, selektiv von dem Hilfsventil (24) verschlossen zu werden.

6. Abzweiganschluss nach einem der vorhergehenden Ansprüche, **dadurch gekennzeichnet, dass** die Verriegelung (40) mit zwei axial längs der Einsteckrichtung (X-X') der Elemente (1, 101) versetzten Erhebungen (42, 43) versehen ist, die geeignet sind, selektiv mit einer korrespondierenden Erhebung (115, 115') zusammenzuarbeiten, die auf einem oder den Steckelement(en) vorgesehen ist, um die zwei Stellungen zu definieren.

7. Abzweiganschluss nach einem der Ansprüche 1 bis 5, **dadurch gekennzeichnet, dass** die Verriegelung mit einer einzigen Erhebung (42) versehen ist, die geeignet ist, mit zwei korrespondierenden Erhebungen (115a, 115b) zusammenzuarbeiten, die an einem oder den Einsteckelement(en) vorgesehen sind und axial längs der Einsteckrichtung (X-X') versetzt sind, um die zwei Stellungen zu definieren.

8. Abzweiganschluss nach einem der vorhergehenden Ansprüche, **dadurch gekennzeichnet, dass** das Verschlussventil (23) und das Hilfsventil (24) elastisch durch gemeinsame Mittel (30) in eine Position (Fig. 1) vorgespannt sind, in der das Verschlussventil (23) das Aufnahmeelement (1) verschließt und in der das Hilfsventil (24) nicht den Kreis (C₁, C₂, C₃) unterbricht.

9. Abzweiganschluss nach einem der vorhergehenden Ansprüche, **dadurch gekennzeichnet, dass** er fest mit einem Sockel (19) zum Anschluss des Kreises (C₁, C₂) verbunden ist, wobei der Sockel selbst mit mindestens einem Kanal (C'₁, C'₂) zur Zirkulation von Gas versehen ist und geeignet ist, lösbar (durch 61, 62) auf einem Körper (70) befestigt zu werden, der die Leitung definiert.

10. Abzweiganschluss nach einem der vorhergehenden Ansprüche, **dadurch gekennzeichnet, dass** er einen Druckanschluss (1) bildet, der geeignet ist, mit einer Vorrichtung (M) zur Messung des Drucks mittels eines Steckelements (101) verbunden zu werden, das in die erste Stellung eingesteckt ist, wobei der Druckanschluss geeignet ist, an eine Gasquelle (S) zur Füllung des pneumatischen Kreises und/oder eines zugeordneten Behälters mittels desselben Steckelements (101) angeschlossen zu werden, das in die zweite Stellung eingeführt ist.

11. Pneumatischer Kreis (C₁, C₂, C₃; C₁, C₂, C'₁, C'₂), insbesondere ein schienengebundenes Fahrzeug ausrüstend, der mit einem Abzweiganschluss (1) nach einem der vorhergehenden Ansprüche versehen ist.

12. Anordnung, einen pneumatischen Kreis (C₁, C₂, C₃; C₁, C₂, C'₁, C'₂) nach dem Anspruch 11, Mittel (M) zur Messung des Drucks, der in einem Bereich des Kreises herrscht, und Mittel (S) zur Füllung des Kreises oder eines zugeordneten Behälters umfassend, wobei die Mittel zur Messung außerdem ein Steckelement (101) aufweisen, das geeignet ist, in den Abzweiganschluss in die erste und zweite Stellung eingesteckt zu werden.
